# FASCICULE DE BREVET EUROPEEN

(11) **EP 0 633 446 B1**
(45) Date de publication et mention de la délivrance du brevet: **15.04.1998**
(21) Numéro de dépôt: 94400946.3
(22) Date de dépôt: 02.05.1994
(51) Int. Cl.: F41F 3/048, B64G 1/64

(54) **Dispositif d'éjection, par voie pyrotechnique, d'un objet**
Pyrotechnischer Ejektor von Gegenständen
Pyrotechnic device for ejecting articles

(30) Priorité: 28.06.1993 FR 9307847
(43) Date de publication de la demande: 11.01.1995
(73) Titulaire: AEROSPATIALE Société Nationale Industrielle, 75781 Paris Cédex 16 (FR)
(72) Inventeur: Aubret, Jean-Pierre, F-33200 Bordeaux (FR)
(74) Mandataire: Bonnetat, Christian

(56) Documents cités:
- EP-A- 0 296 936
- EP-A- 0 454 545
- EP-A- 0 454 564
- US-A- 4 300 737

## Description

La présente invention concerne un dispositif d'éjection, par voie pyrotechnique, d'un objet par rapport à une structure.

Plus particulièrement, quoique non exclusivement, les objets destinés à être éjectés de ladite structure par ledit dispositif sont notamment des microsatellites qui peuvent être porteurs d'équipements techniques à des fins scientifiques, par exemple, et qui sont alors lancés à partir de satellites selon une trajectoire prédéterminée leur permettant d'atteindre une orbite souhaitée ou un objectif précis en suivant une phase balistique. Bien évidemment, il va de soi que, outre ces applications au domaine spatial, le dispositif selon l'invention peut être utilisé dans d'autres domaines dès l'instant où un objet, qu'il soit de type scientifique, militaire, etc..., doit être éjecté selon une trajectoire depuis une structure qui peut être celle d'un aéronef, d'un navire, d'un véhicule ou d'une station terrestre.

On connaît déjà des dispositifs de ce type. Par exemple, le brevet US-A-4 300 737, sur lequel repose le préambule de la revendication indépendante 1, décrit un dispositif d'éjection pyrotechnique comportant un ensemble à deux éléments coulissants ; des moyens pyrotechniques associés audit ensemble, susceptibles d'éjecter ledit objet et comprenant, à des fins de redondance, une pluralité de sources pyrotechniques commandables ; des moyens susceptibles de mettre en rotation ledit objet lors du coulissement de l'élément correspondant ; et un mécanisme de retenue libérable.

Par ailleurs, le brevet EP-A-0 454 545 de la Demanderesse enseigne un dispositif de séparation et d'éjection d'un objet susceptible d'être soumis à une vitesse longitudinale et à une vitesse de rotation longitudinale ou de roulis autour de l'axe dudit objet, données, pour permettre la mise en phase balistique de l'objet selon la trajectoire prédéterminée. Pour cela, le dispositif comporte un ensemble à deux éléments coulissants, du type à cylindre et piston, dont un élément, dans ce cas le cylindre, est solidaire de la structure, et dont l'autre élément, par conséquent le piston, porte ledit objet. Des moyens réalisés sous la forme d'une charge pyrotechnique sont logés dans ledit ensemble pour permettre l'éjection de l'objet, par le piston coulissant, selon la vitesse longitudinale, et des moyens réalisés sous la forme d'une liaison à doigt et à rampe inclinée impriment à l'objet, par l'intermédiaire dudit piston alors rotatif, sa vitesse de rotation longitudinale. Par ailleurs, un mécanisme de retenue libérable, du type à liaison frangible, maintient l'objet associé au piston coulissant lorsque ce dernier est en position rentrée.

Lorsque la charge pyrotechnique est initiée, rompant par ailleurs le mécanisme à liaison frangible, le piston se déplace d'une position rentrée vers une position sortie jusqu'à une butée de fin de course et, simultanément à sa course de déplacement, il est mis en rotation par la liaison doigt-rampe, dont le doigt est solidaire du cylindre et coopère avec la rampe ménagée le long dudit piston. Ainsi, l'objet se désengage du dispositif avec une vitesse longitudinale et une vitesse de rotation selon une trajectoire prédéterminée pour se placer ensuite en phase balistique.

Bien qu'ils soient structurellement et fonctionnellement efficaces, ces dispositifs d'éjection par voie pyrotechnique connus de l'art antérieur présentent notamment l'inconvénient de ne pouvoir agir sur la trajectoire de l'objet pour la modifier si cela s'avère nécessaire pour une quelconque raison. En effet, à une charge pyrotechnique donnée et à une liaison doigt-rampe déterminée, correspondra une accélération précise du piston entraînant, par suite, les vitesses longitudinale et rotative de l'objet et, par conséquent, une trajectoire unique préétablie pour ce dernier.

La présente invention a pour but de pallier cet inconvénient et propose un dispositif d'éjection d'un objet, par voie pyrotechnique, dont la conception offre notamment la possibilité de choisir la trajectoire la mieux adaptée en cours de vol, en agissant pour cela sur la vitesse d'éjection longitudinale.

A cet effet, le dispositif d'éjection, par voie pyrotechnique, d'un objet par rapport à une structure, du type comportant :
- un ensemble à deux éléments coulissants, du type à cylindre et piston, dont un élément est solidaire de ladite structure et dont l'autre élément porte ledit objet ;
- des moyens pyrotechniques associés audit ensemble et susceptibles, lorsqu'ils sont initiés, d'éjecter ledit objet par coulissement dudit élément portant ledit objet, d'une position rentrée vers une position sortie, lesdits moyens pyrotechniques comprenant une pluralité de sources pyrotechniques commandables ;
- des moyens susceptibles de mettre en rotation ledit objet lors du coulissement dudit élément correspondant, et comprenant une liaison à doigt et à rampe inclinée respectivement prévus sur l'un et sur l'autre desdits éléments ; et
- un mécanisme de retenue libérable, maintenant ledit objet associé audit élément correspondant, lorsque ce dernier est en position rentrée,
est remarquable, selon l'invention, en ce que lesdites sources pyrotechniques commandables sont indépendantes les unes des autres, en ce que ladite liaison des moyens de mise en rotation est définie par une pluralité d'accouplements doigts-rampes dont les caractéristiques physiques des rampes inclinées sont différentes et en ce qu'il comprend des moyens pour commander lesdits doigts, de façon à maintenir le doigt correspondant audit accouplement choisi dans sa rampe et à effacer lesdits autres doigts des rampes.

Ainsi, grâce à l'invention, l'agencement d'une pluralité de sources pyrotechniques distinctes et d'accouplements doigts-rampes à caractéristiques physiques différentes permet de disposer d'un large choix de vitesses d'éjection dudit objet et, donc, de trajectoires variables, ce qui donne la possibilité de choisir, en cours de vol, la source pyrotechnique et l'accouplement qui conviennent le mieux audit objet pour atteindre l'objectif visé selon la trajectoire appropriée correspondant à ce choix.

Par exemple, lesdites sources pyrotechniques commandables sont logées dans un corps fixé audit élément solidaire de la structure et elles communiquent avec ledit ensemble par des conduits respectifs ménagés dans ledit corps et débouchant dans une chambre interne dudit ensemble, située entre les deux dits éléments. Lorsque la source choisie est initiée, elle transmet directement son énergie à travers le conduit et la chambre interne de l'ensemble pour éjecter l'élément mobile de sa position rentrée vers sa position sortie, en imprimant les vitesses longitudinale et de rotation audit objet.

Avantageusement, lesdites rampes inclinées desdits accouplements présentent des longueurs différentes. De même, elles peuvent présenter des pas différents. Ainsi, en jouant sur les caractéristiques physiques des rampes, on obtient des accouplements distincts susceptibles d'imprimer à l'élément coulissant et, donc, à l'objet des vitesses d'éjection variables, ce qui confère au dispositif selon l'invention, en plus des différentes sources pyrotechniques, un grand choix de vitesses d'éjection et, par conséquent, de trajectoires possibles pour ledit objet. De la sorte, on peut adopter, en fonction des circonstances et en cours de vol, la trajectoire la plus appropriée pour que l'objet atteigne l'objectif visé, en choisissant pour cela la source pyrotechnique et l'accouplement doigt-rampe les plus favorables.

Plus particulièrement, lesdits moyens de commande des doigts peuvent être définis, pour chaque doigt, par un organe moteur auquel est associé ledit doigt et qui est lié à l'élément solidaire de ladite structure, ledit organe moteur étant susceptible d'engager ou de retirer le doigt de ladite rampe correspondante par un déplacement axial de celui-ci, orthogonal à l'axe longitudinal dudit ensemble. De préférence, lesdits organes moteurs et leurs doigts respectifs sont montés, de façon équi-angulairement répartie les uns par rapport aux autres, dans l'extrémité ouverte dudit élément solidaire de la structure, opposée à son fond auquel est fixé coaxialement ledit corps portant lesdites sources pyrotechniques.

Dans un mode préféré de réalisation, ledit mécanisme de retenue libérable se compose :
- d'une tige traversant coaxialement ledit ensemble et liée à l'une de ses extrémités, au fond dudit élément fixe solidaire de la structure ;
- d'un écrou axialement fendu, comportant au moins deux parties et coopérant, en position rentrée dudit élément coulissant, avec l'autre extrémité filetée de ladite tige, pour s'appliquer contre ledit objet reposant lui-même sur ledit élément coulissant ; et
- d'un tube creux déplaçable par l'action desdits moyens pyrotechniques, qui entoure concentriquement ladite tige et dont une première extrémité maintient en place, en position rentrée dudit élément coulissant, lesdites parties de l'écrou, tandis que sa seconde extrémité est agencée dans la chambre interne dudit ensemble entre les deux éléments, pour communiquer avec lesdits moyens pyrotechniques.

En particulier, la seconde extrémité dudit tube creux est élargie pour coulisser, de façon étanche, dans ladite chambre et présente une gorge périphérique externe dans laquelle débouchent lesdits conduits respectifs desdites sources pyrotechniques distinctes. Ainsi, tant qu'aucune source n'est initiée, le tube occupe une position pour laquelle sa première extrémité maintient l'écrou en place, verrouillant l'objet sur l'élément coulissant en position rentrée. Lorsqu'une des sources est initiée, elle entraîne le déplacement du tube vers le fond de l'élément fixe, de sorte que sa première extrémité se désengage des parties de l'écrou qui s'écartent spontanément les unes des autres. L'objet est alors déverrouillé du piston, lequel reçoit la pression issue de la source pour passer de sa position rentrée à sa position sortie en éjectant l'objet selon la trajectoire souhaitée.

Selon une autre caractéristique de l'invention, le dispositif peut comprendre, de plus, des moyens de réglage commandables de la course dudit élément coulissant par rapport audit élément fixe dudit ensemble, lesdits moyens de réglage étant associés audit ensemble et permettant d'agir sur la course spécifique à chaque accouplement doigt-rampe. Ainsi, non seulement le dispositif permet de choisir la source pyrotechnique et l'accouplement doigt-rampe, mais autorise également l'intervention sur l'accouplement choisi pour affiner encore la trajectoire de l'objet, en n'utilisant, par exemple, qu'une portion de la longueur de ladite rampe inclinée choisie. On obtient, alors, une pluralité de réglages possibles pour éjecter l'objet selon une trajectoire quasi-parfaite.

Dans un mode particulier de réalisation, ces moyens de réglage commandables comprennent :
- un manchon creux fileté, entourant ledit ensemble et immobilisé axialement en translation sur ledit élément fixe ;
- un organe moteur susceptible d'entraîner en rotation ledit manchon ; et
- un écrou monté sur ledit manchon et fixe en rotation par rapport à celui-ci, de façon que, lorsque ledit manchon est entraîné en rotation par ledit organe moteur, ledit écrou se déplace axialement le long dudit ensemble pour déterminer la course dudit élément coulissant en fonction dudit accouplement choisi et définir une butée fin de course de celui-ci.

En outre, la course dudit élément coulissant est limitée par une butée qui lui est associée et qui vient s'appliquer, lorsque lesdits moyens pyrotechniques sont initiés, contre ledit écrou des moyens de réglage.

Par exemple, ladite butée peut être liée audit élément coulissant par une pluralité de pattes latérales s'étendant autour dudit élément solidaire de la structure et reliant la butée audit élément coulissant, et ledit écrou desdits moyens de réglage présentant alors des ailettes radiales s'engageant entre lesdites pattes latérales pour être immobilisé en rotation.

Les figures du dessin annexé feront bien comprendre comment l'invention peut être réalisée. Sur ces figures, des références identiques désignent des éléments semblables.

La figure 1 représente une vue extérieure d'un exemple de réalisation du dispositif d'éjection par voie pyrotechnique de l'invention.

La figure 2 est une coupe axiale dudit dispositif selon la ligne II-II de la figure 1, dans sa position initiale pour laquelle ledit objet à éjecter est verrouillé.

Les figures 3, 4 et 5 sont respectivement des coupes transversales du dispositif selon les lignes III-III, IV-IV et V-V de la figure 2.

La figure 6 est une vue de dessous du dispositif selon la flèche F de la figure 2.

La figure 7 est une coupe axiale dudit dispositif dans sa position finale, pour laquelle lesdits moyens pyrotechniques sont initiés, entraînant la libération et l'éjection dudit objet par rapport au dispositif, selon la trajectoire choisie.

La figure 7A représente un agrandissement du détail D de la figure 7, montrant le déverrouillage de l'objet par rapport au piston du dispositif.

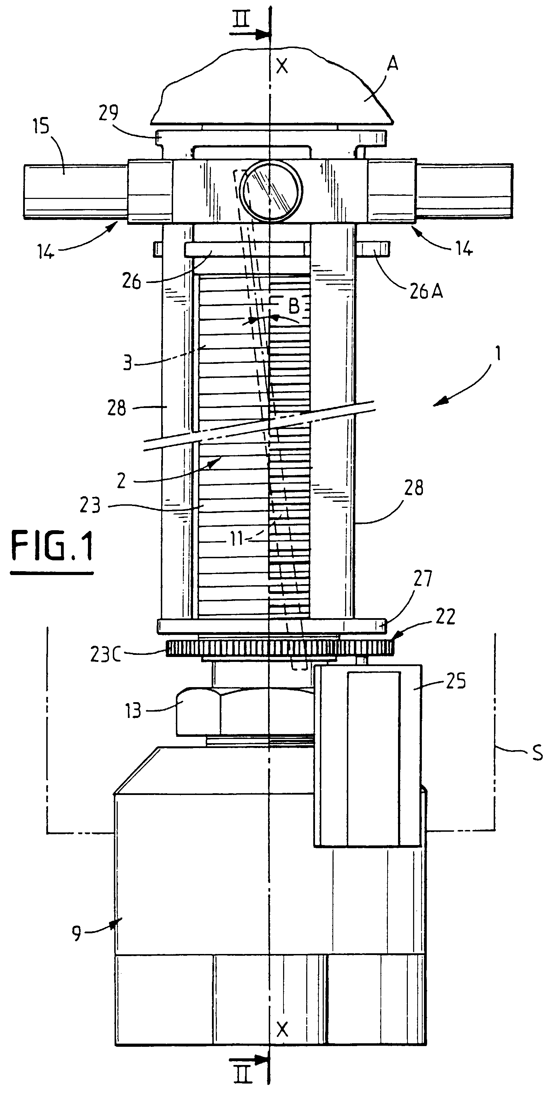

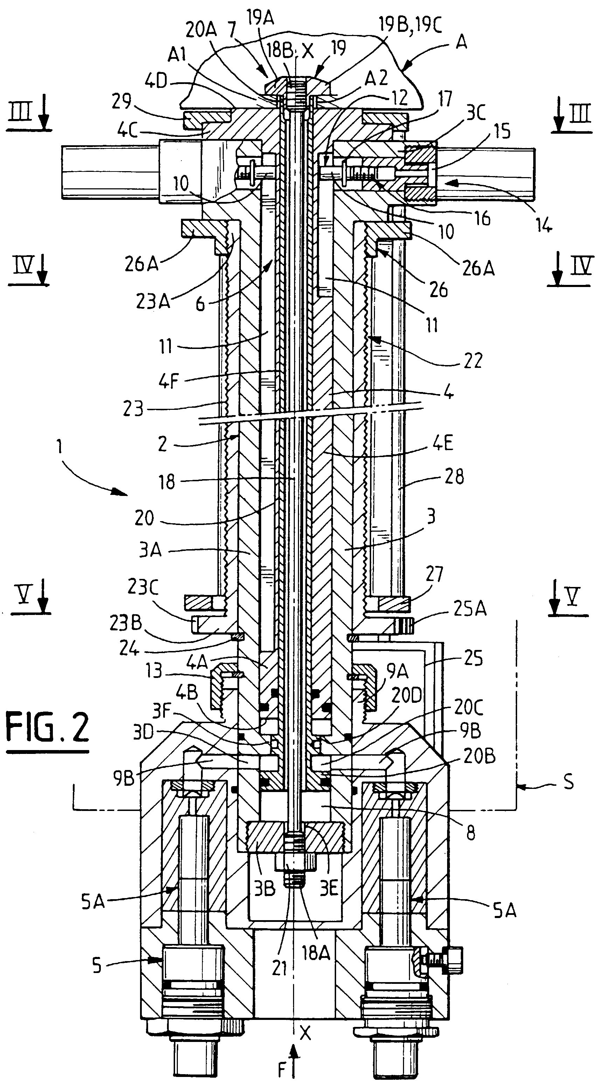

Le dispositif d'éjection 1, montré sur les figures 1 et 2, est destiné à assurer le lancement, par voie pyrotechnique, d'un objet A tel que défini précédemment, à partir d'une structure S représentée symboliquement par des traits mixtes et qui peut être celle d'un satellite, d'un aéronef, etc ... Le dispositif d'éjection 1 comprend alors un ensemble 2 à deux éléments coulissants 3 et 4, dont l'un est fixé à ladite structure et dont l'autre supporte ledit objet A, des moyens pyrotechniques 5 pour éjecter l'objet A par coulissement de l'élément portant l'objet d'une position rentrée vers une position sortie, des moyens 6 pour mettre en rotation l'objet lors du coulissement de l'élément correspondant, et un mécanisme de retenue libérable 7 pour maintenir l'objet sur l'élément coulissable, lorsque ce dernier est en position rentrée.

L'ensemble 2 est du type à vérin, de sorte que ces deux éléments définissent le cylindre et le piston du vérin. Dans cet exemple de réalisation, l'élément 3 de l'ensemble ou du vérin 2 correspond au cylindre solidaire de la structure et, donc, fixe, tandis que l'élément 4 de l'ensemble correspond au piston alors mobile, portant l'objet A. Plus particulièrement, le cylindre 3 est pourvu d'une paroi latérale 3A se terminant d'un côté par un fond 3B et, de l'autre côté, par une extrémité ouverte élargie 3C. Quant au piston 4, il peut coulisser avec étanchéité dans le cylindre 3 et son extrémité interne 4A logée dans le cylindre se termine par une face transversale 4B qui définit, avec le fond 3B du cylindre et la paroi latérale 3A, une chambre interne 8. A l'opposé, l'extrémité externe 4C du piston débouche de l'extrémité ouverte 3C du cylindre et elle est élargie pour s'appliquer dans la position initiale occupée par le dispositif 1 sur les figures 1 et 2, contre cette extrémité ouverte 3C. Aussi, la face transversale 4D terminant l'extrémité externe élargie 4C du piston supporte l'objet A dont l'axe de symétrie est confondu avec l'axe longitudinal X-X de l'ensemble ou vérin 2.

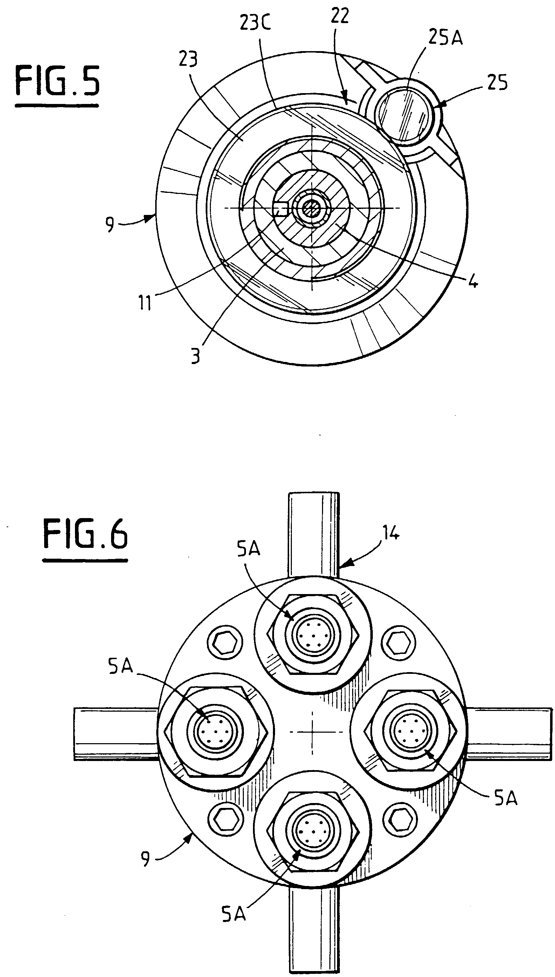

Selon l'une des caractéristiques de l'invention, les moyens pyrotechniques 5 sont constitués par une pluralité de sources pyrotechniques commandables 5A, indépendantes les unes des autres. A titre d'exemple, on voit sur les figures 2 et 6, que quatre sources pyrotechniques 5A sont prévues pour ce dispositif d'éjection 1. Elles sont montées, de façon équi-angulairement répartie les unes par rapport aux autres, d'un angle de π/2, dans un corps 9 cylindrique qui est fixé coaxialement au cylindre 3, au voisinage de son fond 3B, par vissage à l'aide d'un écrou 13 coopérant avec une partie filetée 9A du corps. Celui-ci entoure alors la partie basse du cylindre 3. Les sources pyrotechniques 5A, logées dans le corps 9, sont en communication avec la chambre interne 8 du vérin 2 par des conduits 9B ménagés dans le corps et des trous 3D percés en correspondance des conduits 9B, dans la paroi latérale 3A du cylindre. En outre, les sources pyrotechniques 5A présentent des puissances distinctes et, de façon connue et à titre d'exemple, l'une desdites sources peut être constituée par un inflammateur surchargé, tandis que les trois autres peuvent comprendre des inflammateurs associés à des blocs de poudre différents. Ainsi, le dispositif 1 propose, dans ce cas, quatre sources pyrotechniques de puissance différente, permettant d'éjecter ledit objet A selon des trajectoires distinctes en fonction de l'accélération transmise audit piston 4 pour passer de sa position rentrée à sa position sortie.

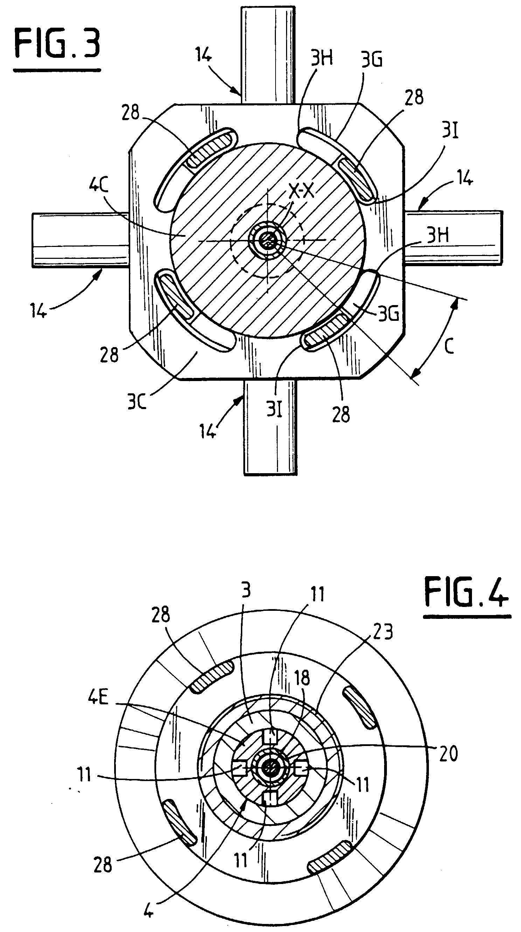

Par ailleurs, les moyens 6 pour mettre en rotation l'objet A, autour de son axe de symétrie, lors du coulissement du piston 4, comprennent une liaison à doigt 10 et à rampe inclinée 11 qui, selon une autre caractéristique de l'invention, est définie par une pluralité d'accouplements 12 doigts-rampes, dont les caractéristiques physiques des rampes 11 sont différentes. Quatre accouplements 12 sont, par exemple, prévus sur le dispositif 1, et les rampes inclinées 11 sont alors ménagées le long et dans la paroi latérale 4E du piston, tandis que les doigts 10 sont associés au cylindre 3 en étant situés plus particulièrement dans son extrémité ouverte 3C. Les quatre doigts 10 sont espacés à 90° les uns des autres et ils peuvent coulisser radialement par rapport à l'axe longitudinal X-X du vérin, par l'intermédiaire de moyens commandables 14 pour s'engager ou se retirer des rampes respectivement, comme on le verra ultérieurement. Les caractéristiques physiques des rampes 11 sont différentes, d'une part en ce qui concerne leurs longueurs et, d'autre part, en ce qui concerne leur pas. Comme le montre la figure 2, les deux rampes 11 représentées et dont le profil a été ramené dans ce plan de coupe, présentent deux longueurs extrêmes, grande et petite, réalisées dans la paroi latérale 4E du piston. Les deux autres rampes, perpendiculaires à celles illustrées et montrées sur la figure 4, peuvent avoir des longueurs intermédiaires différentes. Comme le montre la figure 1, la rampe 11 de grande longueur, ménagée dans la paroi latérale 4E du piston 4, est rectiligne avec un angle d'inclinaison B par rapport à l'axe longitudinal X-X du piston, déterminant le pas de la rampe. Les trois autres rampes présentent alors des pas différents. Bien évidemment, les rampes peuvent être rectilignes et/ou hélicoïdales.

Ainsi, on comprend donc qu'à partir de ces accouplements différents 12 et de ces sources pyrotechniques distinctes 5A, on obtient des vitesses de coulissement variables du piston 4, permettant de choisir la trajectoire la plus appropriée à l'objet A pour atteindre son objectif.

Dans la position initiale du dispositif 1, les quatre doigts 10 sont en position sortie, c'est-à-dire qu'ils engagent respectivement les rampes inclinées 11, ce qui assure un positionnement précis du piston 4 par rapport aux doigts. Les moyens commandables 14 desdits doigts comprennent, pour chacun d'eux, un organe moteur 15, tel qu'un moto-réducteur, fixé radialement à l'extrémité ouverte 3C du cylindre. Le déplacement du doigt est réalisé par une liaison vis-écrou 16 dont la vis constitue le doigt 10 et est arrêtée en rotation par une goupille transversale 17. La commande de chaque moto-réducteur 15 entraîne, par l'intermédiaire de la liaison 16, le recul ou l'avance du doigt 10 selon un déplacement orthogonal à l'axe X-X du vérin.

Par ailleurs, l'objet A est verrouillé sur la face transversale 4D du piston par le mécanisme de retenue libérable 7 qui maintient en outre le piston 4 en position rentrée dans le cylindre 3. Dans ce mode particulier de réalisation, le mécanisme 7 se compose d'une tige 18, d'un écrou fendu 19 et d'un tube creux 20. La tige 18 traverse coaxialement le vérin 1 (des passages axiaux 4F et 3E étant respectivement prévus dans le piston et le fond du cylindre) et elle comporte des extrémités filetées 18A,18B qui émergent respectivement du fond 3B du cylindre et de la face transversale 4D du piston. Un écrou de serrage 21 immobilise l'extrémité 18A de la tige sur le fond du cylindre, tandis que l'écrou fendu 19 coopère avec l'autre extrémité filetée 18B, pour presser, par un rebord externe 19A terminant l'écrou fendu, la base A1, partiellement illustrée, de l'objet A sur la figure 2, contre la face transversale 4D du piston. Un perçage A2 est bien entendu prévu dans la base de l'objet pour le passage de la tige et de la partie correspondante de l'écrou, sous son rebord. Cet écrou 19 est axialement fendu pour être composé de deux, trois ou plus parties identiques, lesquelles, lorsqu'elles sont adjacentes et maintenues les unes contre les autres, forment un écrou à part entière, assurant la fixation souhaitée. Pour cela, le tube creux 20 permet le maintien temporaire des parties de l'écrou fendu 19 à rebord, par exemple, pour des raisons de clarté des figures, au nombre de deux 19B et 19C. Ce tube 20 entoure concentriquement la tige 18 en traversant coaxialement le passage 4F du piston. La première extrémité 20A du tube est conformée de façon à s'engager autour des parties de l'écrou 19 pour les maintenir fermement en position, vissées sur l'extrémité filetée 18B de la tige, à la manière d'un outil de vissage dont l'empreinte s'engage autour de l'écrou à visser. La seconde extrémité 20B du tube débouche dans la chambre interne 8 du vérin et elle est élargie pour être susceptible de coulisser, de façon étanche, le long de la paroi latérale 3A du cylindre. Dans l'extrémité élargie 20B du tube est ménagée une gorge externe périphérique 20C avec laquelle communiquent les conduits 9B des sources pyrotechniques, par l'intermédiaire des trous 3D du cylindre. On remarque également sur la figure 2, qu'un épaulement annulaire interne 3F fait saillie par rapport à la paroi latérale 3A dans la chambre interne 8. Cet épaulement 3F, avec lequel coopère une partie 20D de diamètre réduit de l'extrémité élargie du tube, est situé juste au-dessus des trous de passage 3D du cylindre, de sorte qu'il sépare le piston 4 de l'extrémité élargie 20B du tube.

Par ailleurs, le dispositif d'éjection 1 de l'invention comporte des moyens commandables 22 pour régler la course du piston 4 coulissant par rapport au cylindre en fonction de l'accouplement 12 choisi. Ainsi, les quatre longueurs de rampes, définissant quatre courses possibles pour le piston, peuvent être modulées entre leurs limites respectives par l'intermédiaire des moyens 22, ce qui permet de régler précisément la course d'éjection dudit piston pour fournir la trajectoire souhaitée la plus adaptée audit objet.

Dans ce mode particulier de réalisation, les moyens commandables 22 comprennent un manchon creux fileté 23 qui entoure concentriquement la paroi latérale 3A du cylindre. L'extrémité supérieure 23A du manchon est sensiblement en butée contre l'extrémité élargie 3C du cylindre et son extrémité inférieure 23B, qui est élargie, s'applique contre un anneau élastique 24 logé dans la paroi 3A du cylindre. Ainsi, le manchon 23 est immobilisé axialement en position et un organe moteur 25, associé fixement au corps 9, coopère par son pignon de sortie 25A avec une denture 23C ménagée à la périphérie de l'extrémité élargie inférieure 23B du manchon, comme le montrent notamment les figures 2 et 5. Un écrou 26 est alors monté sur le manchon 23 de façon fixe en rotation, comme on le verra ultérieurement. On comprend donc que la rotation du moteur 25 entraîne celle du manchon 23 par la liaison 25A-23C, de sorte que l'écrou 26 immobilisé en rotation se déplace le long du manchon pour régler la course du piston. Cet écrou 26 constitue alors une butée haute, fin de course, réglable pour le piston d'éjection 4 et, sur la figure 2, l'écrou est représenté en position haute maximale.

Aussi, pour arrêter le piston 4 en fin de course, après son éjection, une butée 27 est liée audit piston pour venir s'appliquer alors contre l'écrou 26 des moyens de réglage. Cette butée 27 présente une forme annulaire plate et elle est agencée autour du manchon 23, à proximité de son extrémité inférieure élargie 23B. Des pattes latérales 28, au nombre de quatre et équi-angulairement réparties les unes par rapport aux autres autour dudit ensemble, entourent le manchon 23 et associent fixement la butée 27 à un plateau 29 rapporté sur l'extrémité externe 4C du piston, sensiblement au niveau de sa face transversale 4D. Ce montage particulier est rendu nécessaire par les organes moteurs 15 des doigts, qui font saillie radialement vers l'extérieur du dispositif 1.

Ainsi, comme le montrent les figures 1 à 3, les organes moteurs 15 desdits moyens 14 traversent librement les espaces respectifs prévus entre deux pattes latérales consécutives 28, tandis que le passage longitudinal des pattes 28 à travers l'extrémité élargie 3C du cylindre est obtenu grâce à des lumières arquées 3G ménagées dans celle-ci et ayant pour centre l'axe X-X. On voit notamment sur la figure 3, que la rotation possible du piston 4 autour de l'axe X-X par l'un quelconque des accouplements 12 se fait sur un angle C compris entre la patte 28 et le fond arrondi 3H de la lumière, opposé à celui 31 contre lequel s'applique la patte. Par ailleurs, l'immobilisation en rotation de l'écrou 26 est réalisée alors par des ailettes radiales 26A prolongeant ledit écrou et s'engageant dans les espaces libres prévus entre les pattes latérales, comme le suggère la figure 1.

Le fonctionnement du dispositif d'éjection 1 se déroule de la façon suivante.

Tout d'abord, il occupe la position initiale telle qu'illustrée notamment sur la figure 2, pour laquelle :
- le piston 4 est en position rentrée ;
- le mécanisme de retenue libérable 7 verrouille l'objet A sur le piston rentré 4 ; et
- les quatre doigts 10 des accouplements 12 sont engagés respectivement dans les quatre rampes 11 correspondantes.

Par ailleurs, on suppose que, par rapport à la position de l'objectif à atteindre et de la position occupée par la structure en cours de vol dans le cas d'un satellite ou d'un aéronef, la source pyrotechnique, située à droite sur la figure 2, et l'accouplement 12 à grande rampe inclinée, située à gauche sur cette même figure, doivent être utilisés, et que la course du piston doit être maximale. De la sorte, l'écrou 26 des moyens de réglage est amené en butée haute extrême, comme le montre la figure 2, la distance séparant cette butée haute de la butée basse 27 étant maximale et correspondant à la course souhaitée du piston.

Bien évidemment, on pourrait, à tout moment, intervenir sur le choix de la source 5A et/ou de l'accouplement 12, ainsi que sur le réglage de la course par les moyens 22 si cela s'avérait nécessaire, par exemple dans le cas d'un changement d'objectif à atteindre pour modifier en conséquence la trajectoire de l'objet A.

Lorsque l'ordre d'éjection est donné, les organes moteurs 15 des trois doigts 10, correspondant aux trois accouplements non utilisés, sont commandés pour provoquer l'effacement desdits doigts des rampes concernées. Puis, l'allumage de l'inflammateur de la source pyrotechnique 5A provoque la mise à feu du bloc de poudre dont le jet gazeux engendré traverse le conduit 9B du corps et le trou 3D du cylindre correspondant, après avoir rompu un opercule usuellement prévu sur ce type de source.

A ce moment, le jet gazeux, ayant des caractéristiques de pression et de température élevées, débouche dans la gorge 20C prévue dans la seconde extrémité 20B du tube 20, ce qui provoque la descente de ce dernier jusqu'au fond 3B du cylindre, puisque la section annulaire au niveau de la gorge est plus grande du côté de l'extrémité 20B que du côté de la partie 20C, en raison de l'épaulement interne 3F du cylindre.

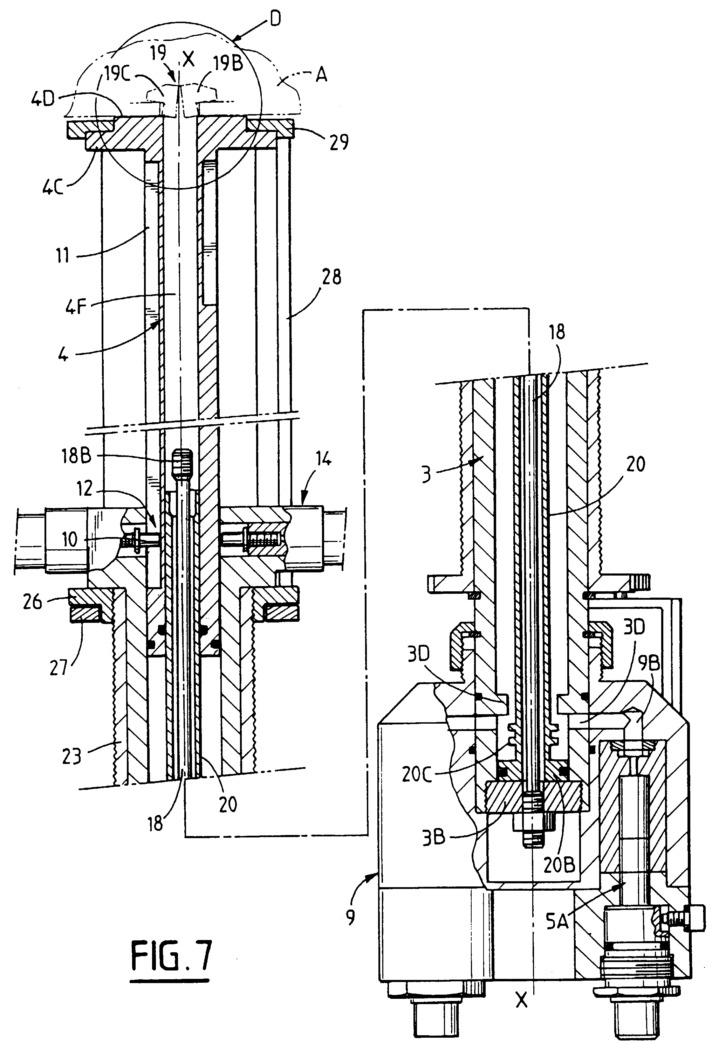

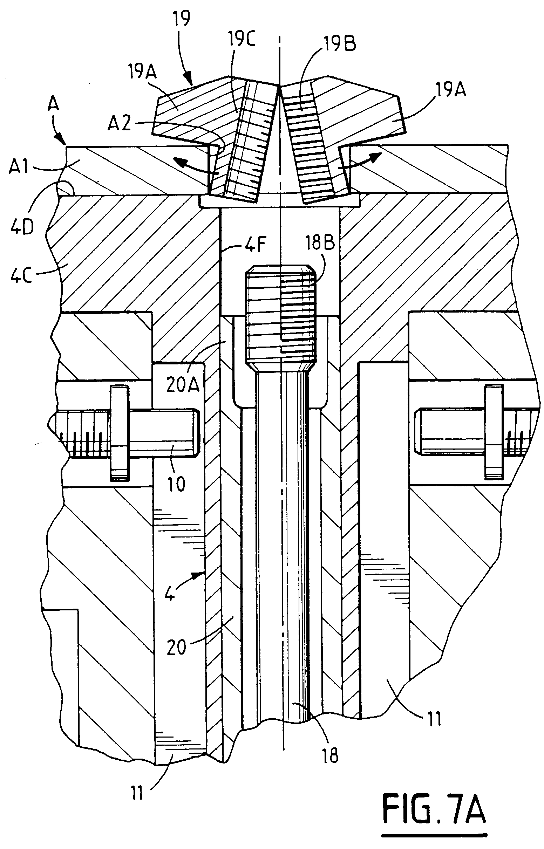

Simultanément au coulissement de la seconde extrémité 20B du tube dans le fond de la chambre 8 du vérin 2, sa première extrémité 20A se désengage des parties de l'écrou fendu 19, de sorte que celles-ci ne sont plus maintenues vissées sur l'extrémité filetée 18B de la tige filetée fixe 18, comme le montre notamment la figure 7A. Par conséquent, l'objet A est déverrouillé du piston 4 par la libération des moyens de retenue 7. En outre, le jet gazeux peut alors passer dans la chambre 8 puisque l'extrémité 20B s'est effacée, pour s'appliquer sur le piston 4.

A ce moment, sous l'action de la pression du jet gazeux exercée sur sa face transversale 4B, le piston 4 se déplace de sa position rentrée vers sa position sortie selon un mouvement de translation et de rotation imposé par l'accouplement 12 doigt-rampe correspondant, sur une course axiale maximale comprise entre les butées 27 et 26 et une rotation de l'angle C. La butée 26, solidaire du piston par les pattes 28 et le plateau 29, vient s'appliquer contre l'écrou 26, stoppant la course du piston.

Sous les vitesses longitudinale et de rotation acquises par le piston par l'action du jet gazeux issu de la source, et de l'accouplement choisi, l'objet A, déverrouillé du piston 4, s'éjecte du dispositif, en étant imprimé de ces vitesses pour suivre la trajectoire souhaitée selon une phase balistique pour atteindre l'objectif visé. Le dispositif d'éjection 1 est montré dans sa position finale sur la figure 7.

Par ailleurs, on remarque que la vitesse de rotation est sensiblement constante puisque l'angle de rotation C du piston par rapport au cylindre est identique et ce, quelle que soit la vitesse longitudinale d'éjection, laquelle est variable et réglable par les différentes sources pyrotechniques 5A et accouplements 12, ainsi que par les moyens de réglage 22.

A titre d'exemple, le rapport entre la plus petite vitesse d'éjection et la plus grande est d'environ 5, soit du point de vue énergétique un rapport de 25.

Par ailleurs, sans sortir du cadre de l'invention et comme l'enseigne le brevet EP-A-0 454 545 de la demanderesse, le dispositif d'éjection pourrait être lié au niveau de centre de gravité de l'objet A, au lieu d'un verrouillage au niveau de sa base.

## Revendications

1. Dispositif d'éjection, par voie pyrotechnique, d'un objet par rapport à une structure, du type comportant :
- un ensemble (2) à deux éléments coulissants, du type à cylindre et piston, dont un élément (3) est solidaire de ladite structure et dont l'autre élément (4) porte ledit objet ;
- des moyens pyrotechniques (5) associés audit ensemble et susceptibles, lorsqu'ils sont initiés, d'éjecter ledit objet par coulissement dudit élément portant ledit objet, d'une position rentrée vers une position sortie, lesdits moyens pyrotechniques comprenant une pluralité de sources pyrotechniques commandables ;
- des moyens (6) susceptibles de mettre en rotation ledit objet lors du coulissement dudit élément correspondant, et comprenant une liaison à doigt (10) et à rampe inclinée (11) respectivement prévus sur l'un et sur l'autre desdits éléments ; et
- un mécanisme de retenue libérable (7), maintenant ledit objet associé audit élément correspondant, lorsque ce dernier est en position rentrée,
caractérisé en ce que lesdites sources pyrotechniques commandables (5A) sont indépendantes les unes des autres, en ce que ladite liaison des moyens de mise en rotation est définie par une pluralité d'accouplements (12) doigts-rampes dont les caractéristiques physiques des rampes inclinées (11) sont différentes et en ce qu'il comprend des moyens (14) pour commander lesdits doigts (10) , de façon à maintenir le doigt correspondant audit accouplement choisi dans sa rampe et à effacer lesdits autres doigts des rampes.

2. Dispositif selon la revendication 1,
caractérisé en ce que lesdites sources pyrotechniques commandables (5A) sont logées dans un corps (9) fixé audit élément (3) solidaire de la structure et elles communiquent avec ledit ensemble (2) par des conduits respectifs (9B) ménagés dans ledit corps et débouchant dans une chambre interne (8) dudit ensemble, située entre les deux dits éléments.

3. Dispositif selon l'une des revendications 1 ou 2,
caractérisé en ce que lesdites rampes inclinées (11) desdits accouplements présentent des longueurs différentes.

4. Dispositif selon l'une des revendications 1 à 3,
caractérisé en ce que lesdites rampes inclinées (11) desdits accouplements présentent des pas différents.

5. Dispositif selon l'une quelconque des revendications 1 à 4,
caractérisé en ce que lesdits moyens de commande (14) des doigts sont définis, pour chaque doigt, par un organe moteur (15) auquel est associé ledit doigt (10) et qui est lié à l'élément (3) solidaire de ladite structure, ledit organe moteur (15) étant susceptible d'engager ou de retirer le doigt (10) de ladite rampe correspondante (11) par un déplacement axial de celui-ci, orthogonal à l'axe longitudinal dudit ensemble.

6. Dispositif selon la revendication 5,
caractérisé en ce que lesdits organes moteurs (15) et leurs doigts respectifs (10) sont montés, de façon équi-angulairement répartie les uns par rapport aux autres, dans l'extrémité ouverte (3C) dudit élément solidaire de la structure, opposée à son fond (3B) auquel est fixé coaxialement ledit corps (9) portant lesdites sources pyrotechniques (5A).

7. Dispositif selon l'une quelconque des revendications 1 à 6,
caractérisé en ce que ledit mécanisme de retenue libérable (7) se compose :
- d'une tige (18) traversant coaxialement ledit ensemble et liée, à l'une (18A) de ses extrémités, au fond dudit élément fixe solidaire de la structure ;
- d'un écrou axialement fendu (19), comportant au moins deux parties et coopérant, en position rentrée dudit élément coulissant (4), avec l'autre extrémité filetée (18B) de ladite tige, pour s'appliquer contre ledit objet reposant lui-même sur ledit élément coulissant ; et
- d'un tube creux déplaçable (20) par l'action desdits moyens pyrotechniques, qui entoure concentriquement ladite tige (18) et dont une première extrémité (20A) maintient en place, en position rentrée dudit élément coulissant, lesdites parties de l'écrou (19), tandis que sa seconde extrémité (20B) est agencée dans la chambre interne (8) dudit ensemble entre les deux éléments, pour communiquer avec lesdits moyens pyrotechniques (5).

8. Dispositif selon la revendication 7,
caractérisé en ce que la seconde extrémité (20B) dudit tube creux est élargie pour coulisser, de façon étanche, dans ladite chambre (8) et présente une gorge périphérique externe (20C) dans laquelle débouchent lesdits conduits respectifs (9B) desdites sources pyrotechniques distinctes.

9. Dispositif selon l'une quelconque des revendications précédentes 1 à 8,
caractérisé en ce qu'il comprend, de plus, des moyens de réglage commandables (22) de la course dudit élément coulissant par rapport audit élément fixe dudit ensemble, lesdits moyens de réglage étant associés audit ensemble (2) et permettant d'agir sur la course spécifique à chaque accouplement (12) doigt-rampe.

10. Dispositif selon la revendication 9,
caractérisé en ce que lesdits moyens de réglage commandables comprennent :
- un manchon creux fileté (23), entourant ledit ensemble et immobilisé axialement en translation sur ledit élément fixe ;
- un organe moteur (25) susceptible d'entraîner en rotation ledit manchon ; et
- un écrou (26) monté sur ledit manchon et fixe en rotation par rapport à celui-ci, de façon que, lorsque ledit manchon est entraîné en rotation par ledit organe moteur, ledit écrou se déplace axialement le long dudit ensemble pour déterminer la course dudit élément coulissant en fonction dudit accouplement choisi (12) et définir une butée fin de course de celui-ci.

11. Dispositif selon la revendication 10,
caractérisé en ce que la course dudit élément coulissant (4) est limitée par une butée (27) qui lui est associée et qui vient s'appliquer, lorsque lesdits moyens pyrotechniques sont initiés, contre ledit écrou (26) des moyens de réglage.

12. Dispositif selon la revendication 11,
caractérisé en ce que ladite butée (27) est liée audit élément coulissant par une pluralité de pattes latérales (28) s'étendant autour dudit élément (3) solidaire de la structure et reliant la butée (27) audit élément coulissant (4), et en ce que ledit écrou (26) desdits moyens de réglage présente des ailettes radiales (26A) s'engageant entre lesdites pattes latérales (28) pour être immobilisé en rotation.

## Patentansprüche

1. Pyrotechnischer Ejektor zum Auswerfen eines Gegenstands aus einer Struktur mit:
- einer Baueinheit (2) mit zwei Gleitelementen in der Art eines Zylinders und eines Kolbens, von denen ein Element (3) mit der Struktur verbunden ist, während sich auf dem anderen Element (4) der Gegenstand befindet;
- pyrotechnischen Mitteln (5), die mit der Baueinheit verbunden sind und nach der Zündung den Gegenstand auswerfen können, indem das Element, auf dem sich der Gegenstand befindet, aus einer eingefahrenen in eine ausgefahrene Stellung gleitet, wobei die pyrotechnischen Mittel aus mehreren steuerbaren pyrotechnischen Quellen bestehen;
- Mitteln (6), durch die der Gegenstand beim Gleiten des entsprechenden Elements in Drehung versetzt werden kann und die eine Verbindung mit Finger (10) und Schrägrampe (11) haben, die jeweils am einen und am anderen Element vorgesehen sind; und
- einem lösbaren Haltemechanismus (7), durch den der Gegenstand am entsprechenden Element blockiert wird, wenn sich dieses in eingefahrener Stellung befindet,
dadurch gekennzeichnet, daß die steuerbaren pyrotechnischen Quellen (5A) voneinander unabhängig sind, daß die Verbindung der Mittel zur Erzeugung der Drehbewegung aus mehreren Finger-Rampenkupplungen (12) besteht, deren Schrägrampen (11) unterschiedliche physikalische Eigenschaften aufweisen, und daß er Mittel (14) zur Steuerung der Finger (10) hat, so daß der Finger der gewählten Kupplung in seiner Rampe gehalten wird und die anderen Finger von den Rampen abgestellt werden können.

2. Vorrichtung nach Anspruch 1,
dadurch gekennzeichnet, daß sich die steuerbaren pyrotechnischen Quellen (5A) in einem Gehäuse (9) an dem mit der Struktur verbundenen Element (3) befinden und mit der Baueinheit (2) durch entsprechende Kanäle (9B) im Gehäuse verbunden sind, die in einer Innenkammer (8) der Baueinheit zwischen den beiden Elementen münden.

3. Vorrichtung nach einem der Ansprüche 1 oder 2,
dadurch gekennzeichnet, daß die Schrägrampen (11) der Kupplungen unterschiedliche Längen haben.

4. Vorrichtung nach einem der Ansprüche 1 bis 3,
dadurch gekennzeichnet, daß die Schrägrampen (11) der Kupplungen unterschiedliche Steigungen haben.

5. Vorrichtung nach einem der Ansprüche 1 bis 4,
dadurch gekennzeichnet, daß die Fingersteuermittel (14) je Finger aus einem Antriebsorgan (15) bestehen, das mit dem Finger (10) und mit dem mit der Struktur verbundenen Element (3) verbunden ist, wobei das Antriebsorgan (15) den Finger (10) an die entsprechende Rampe (11) durch eine axiale Bewegung desselben rechtwinklig zur Längsachse der Baueinheit anstellen oder von dieser abstellen kann.

6. Vorrichtung nach Anspruch 5,
dadurch gekennzeichnet, daß die Antriebsorgane (15) und ihre jeweiligen Finger (10) gleichwinklig zueinander im offenen Ende (3C) des mit der Struktur verbundenen Elements gegenüber dessen Boden (3B), an dem koaxial das Gehäuse (9) mit den pyrotechnischen Quellen (5A) angebracht ist, verteilt sind.

7. Vorrichtung nach einem der Ansprüche 1 bis 6,
dadurch gekennzeichnet, daß der lösbare Haltemechanismus (7) umfaßt:
- eine Stange (18), die koaxial durch die Baueinheit verläuft und an einem ihrer Enden (18A) mit dem Boden des mit der Struktur verbundenen festen Elements verbunden ist;
- eine axial gespaltene Mutter (19), die mindestens aus zwei Teilen besteht und in eingefahrener Stellung des Gleitelements (4) mit dem anderen Gewindeende (18B) der Stange zusammenwirkt und an dem auf dem Gleitelement liegenden Gegenstand anliegt; und
- ein durch die pyrotechnischen Mittel bewegliches Hohlrohr (20), das konzentrisch die Stange (18) umgibt und dessen erstes Ende (20A) in eingefahrener Stellung des Gleitelements die Teile der Mutter (19) blockiert, während sein zweites Ende (20B) in der Innenkammer (8) der Baueinheit zwischen den beiden Elementen angeordnet ist und mit den pyrotechnischen Mitteln (5) in Verbindung steht.

8. Vorrichtung nach Anspruch 7,
dadurch gekennzeichnet, daß das zweite Ende (20B) des Hohlrohrs verbreitert ist, damit es dicht in der Kammer (8) gleiten kann, und eine äußere Umfangsnut (20C) aufweist, in die die jeweiligen Kanäle (9B) der unterschiedlichen pyrotechnischen Quellen münden.

9. Vorrichtung nach einem der obigen Ansprüche 1 bis 8,
dadurch gekennzeichnet, daß sie außerdem steuerbare Mittel (22) zur Einstellung des Hubs des Gleitelements gegenüber dem festen Element der Baueinheit hat, wobei die Einstellmittel mit der Baueinheit (2) verbunden sind und auf den für jede Finger-Rampenkupplung (12) spezifischen Hub einwirken können.

10. Vorrichtung nach Anspruch 9,
dadurch gekennzeichnet, daß die steuerbaren Einstellmittel umfassen:
- eine hohle Gewindemuffe (23), die die Baueinheit umgibt und deren Längsbewegung am festen Element axial blockiert ist;
- ein Antriebsorgan (25), durch das die Muffe in Drehbewegung versetzt werden kann; und
- eine an der Muffe drehfest zu derselben angebrachte Mutter (26), so daß sich die Mutter, wenn die Muffe durch das Antriebsorgan in Drehung versetzt wird, axial an der Baueinheit verschiebt und den Hub des Gleitelements entsprechend der gewählten Kupplung (12) bestimmt und einen Endanschlag desselben bildet.

11. Vorrichtung nach Anspruch 10,
dadurch gekennzeichnet, daß der Hub des Gleitelements (4) durch einen mit diesem verbundenen Anschlag (27) begrenzt wird, der sich bei Zündung der pyrotechnischen Mittel an die Mutter (26) der Einstellmittel anlegt.

12. Vorrichtung nach Anspruch 11,
dadurch gekennzeichnet, daß der Anschlag (27) mit dem Gleitelement durch mehrere seitliche Ansätze (28) verbunden ist, die um das mit der Struktur verbundene Element (3) herum angeordnet sind und den Anschlag 27 mit dem Gleitelement (4) verbinden, und daß die Mutter (26) der Einstellmittel radiale Flügel (26A) hat, die zur Blockierung der Drehbewegung zwischen den seitlichen Ansätzen (28) angeordnet sind.

## Claims

1. Device for ejecting an object from a structure by a pyrotechnic means, of the type comprising:
- an assembly (2) consisting of two sliding components of the cylinder and piston type, in which one component (3) is secured to the said structure and the other component (4) carries the said object;
- pyrotechnic means (5) associated with the said assembly and capable, when initiated, of ejecting the said object by the sliding of the said element carrying the said object from a retracted position to a deployed position, the said pyrotechnic means comprising a number of controllable pyrotechnic sources;
- means (6) capable of rotating the said object as the said corresponding component slides, and comprising a connection by way of a finger (10) and an inclined ramp (11) one provided on each of the said components; and
- a releasable retaining mechanism (7) keeping the said object associated with the corresponding component when the latter is in its retracted position,
characterized in that the said controllable pyrotechnic sources (5A) are independent of one another, in that the said connection of the rotation means is defined by a number of finger-ramp couplings (12) in which the physical characteristics of the inclined ramps (11) are different, and in that it comprises means (14) for controlling the said fingers (10) in such a way as to keep the finger that corresponds to the said chosen coupling in its ramp and move all the other fingers off the ramps.

2. Device according to Claim 1, characterized in that the said controllable pyrotechnic sources (5A) are housed in a body (9) attached to the said component (3) secured to the structure and they communicate with the said assembly (2) via respective passages (9B) formed in the said body and opening into an internal chamber (8) of the said assembly, this chamber lying between the two said components.

3. Device according to either of Claims 1 and 2, characterized in that the said inclined ramps (11) of the said couplings have different lengths.

4. Device according to one of Claims 1 to 3, characterized in that the said inclined ramps (11) of the said couplings have different pitches.

5. Device according to any one of Claims 1 to 4, characterized in that the said means (14) for controlling the fingers are defined, for each finger, by a motor member (15) with which the said finger (10) is associated and which is connected to the component (3) secured to the said structure, the said motor member (15) being capable of engaging the finger (10) in the corresponding ramp (11) or of withdrawing it therefrom by axial displacement of this finger at right angles to the longitudinal axis of the said assembly.

6. Device according to Claim 5, characterized in that the said motor members (15) and their respective fingers (10) are mounted, with uniform angular spacing from one another, in the open end (3C) of the said element secured to the structure, this being the opposite end from its bottom (3B) to which the said body (9) carrying the said pyrotechnic sources (5A) is attached coaxially.

7. Device according to any one of Claims 1 to 6, characterized in that the said releasable retaining mechanism (7) is composed of:
- a rod (18) passing coaxially through the said assembly and connected, at one (18A) of its ends, to the bottom of the said stationary element secured to the structure;
- an axially split nut (19) having at least two parts and interacting, when the said sliding component (4) is in the retracted position, with the other threaded end (18B) of the said rod, so as to press against the said object which is itself resting on the said sliding component; and
- a hollow tube (20) which can be displaced by the action of the said pyrotechnic means and which concentrically surrounds the said rod (18), and a first end (20A) of which hollow tube, when the said sliding component is in the retracted position, holds the said parts of the nut (19) in place, while its second end (20B) is arranged in the internal chamber (8) of the said assembly between the two components so as to communicate with the said pyrotechnic means (5).

8. Device according to Claim 7, characterized in that the second end (20B) of the said hollow tube is widened so that it can slide, in leaktight fashion, in the said chamber (8) and has an external peripheral groove (20C) into which the said respective passages (9B) of the said separate pyrotechnic sources open.

9. Device according to any one of the preceding Claims 1 to 8, characterized in that it additionally comprises controllable means (22) of adjusting the stroke of the said sliding component with respect to the said stationary component of the said assembly, these adjustment means being associated with the said assembly (2) and making it possible to alter the stroke specific to each finger-ramp coupling (12).

10. Device according to Claim 9, characterized in that the said controllable adjustment means comprise:
- a threaded hollow sleeve (23) surrounding the said assembly and prevented from moving in axial translation on the said stationary component;
- a motor member (25) capable of rotating the said sleeve; and
- a nut (26) mounted on the said sleeve and unable to rotate with respect to it so that when the said sleeve is rotated by the said motor member, the said nut moves axially along the said assembly to determine the stroke of the said sliding component as a function of the said chosen coupling (12) and form an end-of-stroke stop therefor.

11. Device according to Claim 10, characterized in that the stroke of the said sliding component (4) is limited by a stop (27) which is associated with it and which, when the said pyrotechnic means are initiated, presses against the said nut (26) of the adjustment means.

12. Device according to Claim 11, characterized in that the said stop (27) is connected to the said sliding component by a number of lateral lugs (28) extending around the said component (3) secured to the structure and linking the stop (27) to the said sliding component (4), and in that the said nut (26) of the said adjustment means has radial tabs (26A) which fit between the said lateral lugs (28) so as to be prevented from turning.
